# EUROPÄISCHE PATENTSCHRIFT

(11) **EP 0 875 424 B1**
(45) Veröffentlichungstag und Bekanntmachung des Hinweises auf die Patenterteilung: **26.06.2002**
(21) Anmeldenummer: 98106343.1
(22) Anmeldetag: 07.04.1998
(51) Int. Cl.: B60R 21/04

(54) **Aufprallschutz**
Crash protection
Protection contre les chocs

(30) Priorität: 29.04.1997 DE 19718062; 09.01.1998 DE 19800476
(43) Veröffentlichungstag der Anmeldung: 04.11.1998
(73) Patentinhaber: Ford Global Technologies, Inc., A subsidiary of Ford Motor Company, Dearborn, Michigan 48126 (US)
(72) Erfinder: Becker, Olaf F., 52072 Aachen (DE)
(74) Vertreter: Drömer, Hans-Carsten, Dipl.-Ing.

(56) Entgegenhaltungen:
- DE-A- 2 000 985
- DE-A- 4 338 249
- FR-A- 1 408 952
- GB-A- 2 296 222
- US-A- 5 577 794
- PATENT ABSTRACTS OF JAPAN vol. 1996, no. 07, 31. Juli 1996 (1996-07-31) & JP 08 080761 A (INOAC CORP), 26. März 1996 (1996-03-26)
- PATENT ABSTRACTS OF JAPAN vol. 1996, no. 08, 30. August 1996 (1996-08-30) & JP 08 091160 A (KOJIMA PRESS CO LTD), 9. April 1996 (1996-04-09)

## Beschreibung

Die Erfindung betrifft einen Aufprallschutz welcher hinter einer Außenwand insbesondere in Kraftfahrzeugen hinter dem Außenblech montiert wird.

Aus GB-A-2 238 989 ist eine Fahrzeugtür bekannt, die aus einer Außenwand und einer daran befestigten, einen Zwischenraum bildenden, Innenwand sowie einer daran befestigten Innenverkleidung besteht. Die Innenverkleidung weist Bereiche geringerer Formsteifigkeit auf, die bei einem Aufprall für eine voraussagbare Verformung und Energieaufnahme sorgen.
An der Innenverkleidung ist ein Prallschutz vorgesehen, der z.B. aus Polystyrenschaum bestehen kann.

Nach US-A-5,306,066 wird der Aufprallschutz an die Innenverkleidung geklebt.

Nach GB-A-2 296 222 werden Polyurethan-Hartschaumpolster an der Innenverkleidung befestigt, insbesondere verklebt.

Die Befestigung an der Innenverkleidung ist aus mehreren Gründen problematisch. Die Verkleidung besteht in der Regel aus Kunststoff, Hartpappe oder Holzfasermaterial, welches relativ dünn ist, so daß eine Befestigung mit Schrauben, Nieten oder ähnlichem ausscheidet, weil nicht zusätzliche Verletzungsquellen geschaffen werden sollen. Deshalb wurde bisher das Polster auf die Innenverkleidung geklebt. Der Kleber hat aber nicht in allen Fällen die erforderliche Langzeitstabilität, das Polster kann also abfallen und hat dann möglicherweise nicht mehr die gewünschte Wirkung. Dabei ist zu berücksichtigen, daß auch die langfristig auftretenden Lastwechsel wie Erschütterungen beim Betrieb des Fahrzeuges und das Zuschlagen der Türen nicht dazu führen dürfen, daß Polster aus ihrer vorgesehenen Lage rutschen.
Außerdem ist in der Regel ein relativ dickes Polster wünschenswert, was bei einer Vormontage an die Innenverkleidung dazu führt, daß beim Transport zur Montagelinie eine nur geringe Packungsdichte in den Transporteinheiten erreicht wird.

JP-A-08 080 761 zeigt einen Aufprallschutz, der die Merkmale des Oberbegriffs des Anspruchs 1 aufweist.

Ein verbesserter Aufprallschutz sollte die genannten Nachteile vermeiden, insbesondere leicht und zuverlässig mit der erforderlichen Langzeitstabilität montierbar sein, die Montage bzw. Befestigung sollte nicht nur die Bildung neuer Verletzungsrisiken vermeiden sondern aktiv die Schutzwirkung für die Insassen des Fahrzeuges verbessern und es sollte eine Lösung gefunden werden, die einen raumsparenden Transport ermöglicht.

Als Lösung wird der Aufprallschutz nach Anspruch 1 vorgeschlagen. Der Aufprallschutz besteht dann aus einem Grundkörper (Polster) bei dem es sich zum Beispiel um einen Körper aus Laminat oder eine Schichtstruktur oder Wabensstruktur oder um ein im wesentlichen flächiges Gebilde handeln kann und aus damit verbundenen Befestigungsvorrichtungen, die untereinander verbunden sind.

Hierdurch wird in einem Arbeitsgang das Polster komplett montierbar erzeugt. Zum Beispiel werden die Befestigungsvorrichtungen, wie in der JP-A-08 080 761 gezeigt, eingeschäumt, was zu einer innigen Verbindung von Schaum und Befestigungsvorrichtung ohne die Verwendung von zusätzlichem Kleber führt. Die eingeschäumten Befestigungsvorrichtungen sichern die zuverlässige Positionierung für die Insassen auch bei langer Betriebsdauer. Die Polster können separat von den Innenverkleidungen transportiert werden, wodurch sich insgesamt der erforderliche Stauraum verringert. Die Montage wird vereinfacht, weil bei Montage der Innenverkleidung das Polster bereits eingebaut ist, sich jene daher leichter einpassen läßt. Anstatt eine Einschäumung kann jede andere geeignete Verbindung zwischen Grundkörper (Polster) und Befestigungsvorrichtung vorgesehen sein.

Die Befestigungsvorrichtungen sind als im wesentlichen flache Halter aus flexiblem Material ausgeführt. An diesen Haltern sind bevorzugt Befestigungsmittel bereits ausgebildet, z.B. Dübel, Clips, Schnappvorrichtungen o.ä. Inbesondere weisen die Befestigungsvorrichtungen vorgeformte Konturen auf, die eine Aufnahme von Befestigungsmitteln ermöglichen. Die Kontur zur Aufnahme von Befestigungsmitteln kann z.B. die Form eines Langloches haben. Die Befestigungsmittel dienen der Verbindung der Befestigungsvorrichtungen des Grundkörpers (Polsters) mit der Fahrzeugkarosserie.

Bevorzugt ist in wenigstens einem Halter ein Langloch (insbesondere n-1 bei n Haltern) angebracht, wobei das Langloch einen Abschnitt (insbesondere kreisförmig) größerer Breite aufweist oder es werden in dem Halter vergrößerte Löcher benutzt, die Befestigungsmittel aufnehmen. Speziell ist das Langloch oder vergrößerte Rundloch mit einem Abschnitt bis zum Rand des Halters oder Bandes durchgezogen, sodaß eine i.w. u-förmige oder schlüssellochartige Ausnehmung entsteht. Hierdurch können Fertigungstoleranzen ausgeglichen und die Befestigungsmittel separat von dem Polster ausgetauscht werden.

Nach einer weiter bevorzugten Ausführung ragen die Befestigungsvorrichtungen über die seitlichen Begrenzungen des Polsters hinaus und weisen, inbesondere wenn es sich um Halter handelt, Vorsprünge oder Ausnehmungen auf, die der Lagefixierung und der richtigen Ausrichtung beim Anbringen der Halter im bzw. am Grundkörper dienen.

Um die Verbindung zum Polster zu verbessern weisen die Befestigungsvorrichtungen in dem Bereich, der mit dem Grundkörper verbunden ist, eine Oberfläche auf, mit der die Haftung zum Polster verbessert wird. Hierzu kann die Oberfläche aufgerauht sein, eine besondere Beschichtung aufweisen oder besonders profiliert sein, um die Haftfläche zu vergrößern. Bevorzugt ist die Form der Befestigungsvorrichtungen im in den Grundkörper hineinreichenden Bereich so ausgebildet, daß ein oder mehrere Ausnehmungen vorgesehen sind, die als Durchgangslöcher vollständig von dem Material der Befestigungsvorrichtung umgeben sind.

Wenigstens eine Stufe ist in den Bereich eingebracht, der mit dem Grundkörper verbunden ist. Dies verbessert die Kraftübertragung zwischen Halter und Polster bei Belastung. Insbesondere wird hierduch die Langzeitstabilität verbessert.

Die Halter weisen in Längsrichtung wenigstens eine weitere Stufe auf mit der die Einbringtiefe in den Grundkörper relativ zur Befestigungsebene eingestellt werden kann und die insbesondere, zur Aufnahme von Verformungsenergie, mit längsverlaufenden Versteifungen (Knotenflächen) versehen sein kann. Die Halter sind untereinander verbunden (z.B. durch Streifen aus Material des Halters oder ein anderes hochfestes Gewebe). Hierdurch wird die Aufnahme der Verformungsenergie verbessert.

Die Halter können einstückig formstabil ausgeführt werden, was die Herstellung vereinfacht weil nur noch ein Teil mit allen notwendigen Befestigungen in den Grundkörper eingebracht bzw. mit diesem verbunden zu werden braucht. Außerdem wird durch die Verbindung der Halter untereinander die Lebensdauer erheblich verbessert, auch die Kraftverteilung wird günstiger. Die einstückige formstabile Ausführung beinhaltet bevorzugt eine zusätzliche Platte, die dazu dient, die von außen auf den Grundkörper aufgebrachten Kräfte beim Seitenaufprall besser auf diesen zu verteilen.

Statt der einstückig formstabilen Verbindung der Halter kann eine Verbindung durch ein hochfestes Gewebe (z.B. Kevlar) vorgesehen sein. Dabei können lokal optimierte mechanische Eigenschaften erreicht werden. Insbesondere kann, u.a. bei lokaler Belastung, die Kraftverteilung weiter optimiert werden. Außerdem wird die mechanische Verbindung zwischen Grundkörper, Halter und zusätzlicher Platte durch die vergrößerten Flächen verbessert.

Das Polster weist bevorzugt zum Fahrzeuginnenraum eine größere Fläche auf als zur Fahrzeugaußenwand. Hierdurch wird, in Verbindung mit den versteifenden Befestigungsvorrichtungen, der Druck auf die Innenverkleidung und damit auf den Insassen verringert.

Insbesondere die kleinere Fläche kann eine zusätzliche Platte zur Verteilung von Kräften aufweisen.

Bevorzugt ist die zusätzliche die zusätzliche Platte wenigstens teilweise von dem Grundkörper umschlossen.

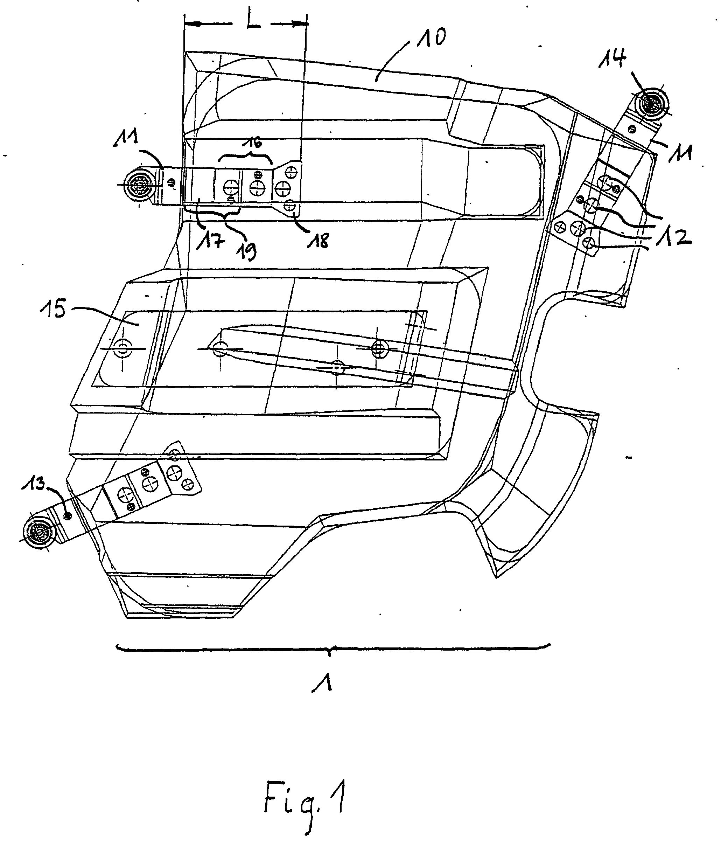

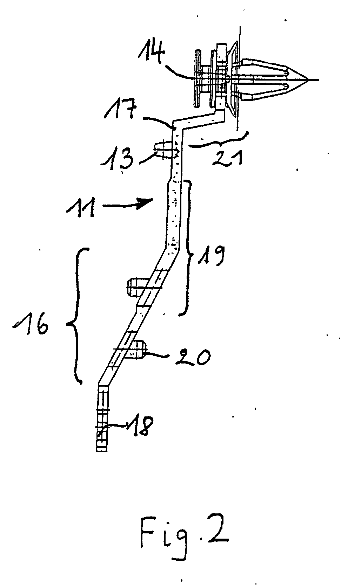

Ein Ausführungsbeispiel eines beanspruchten Aufprallschutzes ist in der Fig. 1 als Draufsicht aus der Richtung der Fahrzeugaußenseite dargestellt. Die Fig. 2 zeigt eine Seitenansicht einer Befestigungseinrichtung. Das Ausführungsbeispiel beschreibt einen Grundkörper aus Hartschaum (Polyurethan).

Der Aufprallschutz 1 weist ein Polster 10 aus Hartschaum, bevorzugt aus Polyurethan Polypropylen und Halter 11 aus Polyamid auf. Die Halter 11 sind hier nur teilweise, nämlich über eine Länge "L" von etwa 50 mm, eingeschäumt. Die Einschäumtiefe beträgt mindestens etwa 10 mm. Im eingeschäumten Bereich sind Ausnehmungen 12 zur Vergrößerung der Oberfläche und zur Verbesserung der Verbindung von Schaum und Halter angebracht. Löcher und/oder zylindrische Ansätze 13 (Fig. 2) dienen der Ausrichtung der Halter beim Einschäumen. Weitere zylindrische Ansätze 20 dienen der verbesserten mechanischen Verankerung und damit der Langzeitstabilität. An den Haltern sind Clips 14 befestigt, in die nicht dargestellte Haltepins eingepreßt werden können. Auch kann an der zur Fahrzeugaußenseite gewandten kleineren Fläche eine zusätzliche Platte 15 zur Verteilung von Kräften angebracht sein. Die Halter 11 weisen im Bereich der eingeschäumten Länge "L" wenigsten eine Schrägstufe 16 zwischen den etwa parallel verlaufenden Abschnitten 17, 18 auf. Im Bereich der Schräge16 und dem Abschnitt 17 ist zur Erhöhung der Steifigkeit in diesem Bereich 19 der Halter verdickt ausgeführt. Durch die Versteifung werden Vibrationen in diesem Bereich vermindert, was zu einer verbesserten Langzeithaftung zwischen Halter und Polster führt. Der Abschnitt 18 weist eine vergößerte Breite auf. Er ist trapezförmig ausgeführt. Es kommen jedoch auch beliebige andere Formen in Betracht (z.B. kreis-, halbkreis-, dreieck-, schwalbenschwanzförmig). Durch die vergrößerte Breite wird eine verbesserte Haftung zwischen dem Halter und dem geschäumten Polster erreicht.

Der in Fig. 2 in der Seitenansicht dargestellte Halter 11 weist eine Stufe 21 auf, die dem Ausgleich von Toleranzen dient.

## Patentansprüche

1. Aufprallschutz (1) für Kraftfahrzeuge aus einem Aufprallenergie absorbierendem Grundkörper (10), wobei Befestigungsvorrichtungen (11) angebracht sind, die als im wesentlichen flache Halter (18) aus flexiblem Material ausgeführt sind, in Längsrichtung wenigstens eine Stufe (16) aufweisen und wobei wenigstens eine der Stufen (16) im Inneren des Grundkörpers (10) angeordnet ist, **dadurch gekennzeichnet, dass** die Halter (11) untereinander verbunden sind.

2. Aufprallschutz nach Anspruch 1, **dadurch gekennzeichnet, dass** die Halter (11) einstückig formstabil ausgeführt sind und in den Grundkörper (10) eingebracht sind.

3. Aufprallschutz nach Anspruch 2, **dadurch gekennzeichnet, dass** die einstückig formstabile Ausführung eine Platte (15) beinhaltet.

4. Aufprallschutz nach Anspruch 1, **dadurch gekennzeichnet, dass** die Verbindung der Halter (11) als ein hochfestes Gewebe ausgeführt ist.

## Claims

1. Impact protection (1) for motor vehicles, consisting of a basic body (10) absorbing impact energy, fastening devices (11) being attached, which are designed as essentially flat holders (18) made of flexible material and have at least one step (16) in the longitudinal direction, and at least one of the steps (16) being arranged inside the basic body (10), **characterized in that** the holders (14) are connected to one another.

2. Impact protection according to Claim 1, **characterized in that** the holders (18) are produced in one piece so as to be dimensionally stable and are introduced into the basic body (10).

3. Impact protection according to Claim 2, **characterized in that** the one-piece dimensionally stable version contains a plate (15).

4. Impact protection according to Claim 1, **characterized in that** the connection of the holders (18) is designed as a high-strength fabric.

## Revendications

1. Protection contre les chocs (1) pour des véhicules à moteur, se composant d'un corps de base (10) absorbant l'énergie des chocs, des dispositifs de fixation (11) étant montés, lesquels sont réalisés sous la forme de supports (11) essentiellement plats en matériau flexible, présentent dans la direction longitudinale au moins un étage (16) et au moins l'un des étages (16) étant disposé à l'intérieur du corps de base (10), **caractérisée en ce que** les supports (11) sont reliés entre eux.

2. Protection contre les chocs selon la revendication 1, **caractérisée en ce que** les supports (11) sont réalisés d'une pièce et de manière indéformable et sont intégrés dans le corps de base (10).

3. Protection contre les chocs selon la revendication 2, **caractérisée en ce que** la réalisation d'une pièce indéformable contient une plaque (15).

4. Protection contre les chocs selon la revendication 1, **caractérisée en ce que** la liaison des supports (11) est réalisée sous la forme d'un tissu à haute résistance.
